# EUROPÄISCHE PATENTSCHRIFT

(11) **EP 2 646 219 B1**
(45) Veröffentlichungstag und Bekanntmachung des Hinweises auf die Patenterteilung: **06.08.2014**
(21) Anmeldenummer: 11782065.4
(22) Anmeldetag: 10.11.2011
(51) Int. Cl.: B29C 49/76, B29C 47/40

(54) **VORRICHTUNG ZUM HERSTELLEN EINES BEHÄLTERS**
APPARATUS FOR MANUFACTURING A CONTAINER
APPAREIL POUR LA FABRICATION D'UN RÉCIPIENT

(30) Priorität: 03.12.2010 DE 102010053285
(43) Veröffentlichungstag der Anmeldung: 09.10.2013
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2011/005654
(87) Internationale Veröffentlichungsnummer: WO 2012/072182

(56) Entgegenhaltungen:
- EP-A2- 0 428 394
- GB-A- 2 066 210
- GB-A- 2 069 455
- DATABASE WPI Week 198549 Thomson Scientific, London, GB; AN 1985-307757 XP002678747, -& JP 60 214924 A (AIDA ENG LTD) 28. Oktober 1985 (1985-10-28)

## Beschreibung

Die Erfindung betrifft eine Vorrichtung zum Herstellen mindestens eines Behälters, insbesondere in Ampullenform, aus thermoplastischem Kunststoff, mit einer Form mit Formteilen, die zwischen einer Offenstellung und einer Schließstellung relativ zueinander bewegbar sind, in welcher Kunststoffmaterial durch einen daran wirksamen Druckgradienten zur Bildung des Behälters an die Wand der Form anlegbar ist, mit einem ersten und einem zweiten Kalibrierdorn, die zur Längsrichtung des Behälters und zueinander koaxial bewegbar sind, wobei der erste Kalibrierdorn durch den in der Form befindlichen Behälter hindurch und der zweite Kalibrierdorn von der Außenseite des Behälters her relativ zueinander in eine Formgebungsposition bewegbar sind, in der sie zwischen ihren Dornenden eine zumindest ein Teil eines Behälterbodens bildende Bodenstelle kalibrieren, und mit einer Abtrenneinrichtung, die eine bewegbare Schneid- oder Stanzfläche aufweist, um in Zusammenwirkung mit einer Schneid- oder Anlegekante an den dem Bodenbereich zugeordneten Formteilen bei der Formgebung entstehendes, überschüssiges Kunststoffmaterial abzutrennen.

Für eine rationelle Herstellung von Kunststoffbehältern unterschiedlicher Art, insbesondere auch ampullenartiger Behälter für Pharmazeutika, Reagenzien oder dergleichen, werden im Stand der Technik mit Vorteil nach dem bekannten bottelpack^{®}-Verfahren arbeitende Vorrichtungen eingesetzt. Diese Vorrichtungen ermöglichen es, durch Blasformen oder Unterdruckformen aus in eine Form extrudiertem Kunststoffmaterial die gewünschte Behälterform aufzublähen und, wenn es gewünscht wird, den Behälter in der Form zu befüllen, wobei, da zwischen Formvorgang des Behälters und dessen Befüllung keine Handhabung außerhalb der Form erforderlich ist, Forderungen nach Reinheit und/oder Sterilität der Füllung sicher erfüllt werden können.

Bei der späteren Verwendung der fertiggestellten Behälter, etwa im medizinisch-pharmazeutischen Bereich, erfolgt die Entnahme der Füllung zumeist durch den Behälterboden, beispielsweise mittels Einstich einer Kanüle oder Auftrennen einer Bodenstelle. Um eine sichere Entnahme des Behälterinhalts zu gewährleisten, ist es Stand der Technik, an der für den Entnahmevorgang maßgeblichen Bodenstelle eine Kalibrierung vorzunehmen. Das Dokument DE 30 05 931 A1 offenbart eine Vorrichtung der eingangs genannten Art, die für diesen Zweck bewegbare Kalibrierdorne aufweist, die von beiden Seiten des Behälterbodens des in der Form befindlichen Behälters her zueinander koaxial in eine Formgebungsposition bewegbar sind, in der sie zwischen ihren Dornenden die Bodenstelle in der Weise kalibrieren, dass ein bodenseitiger Wandbereich definierter Form und Wandstärke in der Art einer Membran gebildet wird. Mittels einer bei der bekannten Vorrichtung vorgesehenen Abtrenneinrichtung wird bei der Formgebung entstehendes überschüssiges Kunststoffmaterial an den dem Bodenbereich zugeordneten Formteilen abgetrennt, um den Herstellvorgang des Bodenbereichs abzuschließen.

Der Erfindung liegt die Aufgabe zugrunde, ausgehend von diesem Stand der Technik eine Vorrichtung zur Verfügung zu stellen, bei der auf einfache Weise eine erhöhte Genauigkeit und Betriebssicherheit für die Vorgänge des Kalibrierens und des Abtrennens erreichbar ist.

Erfindungsgemäß ist diese Aufgabe durch eine Vorrichtung gelöst, die die Merkmale des Patentanspruches 1 in seiner Gesamtheit aufweist.

Gemäß dem kennzeichnenden Teil des Anspruchs 1 besteht eine wesentliche Besonderheit der Erfindung darin, dass die Abtrenneinrichtung eine an dem zweiten Kalibrierdorn axial verschiebbar geführte, die Schneid- oder Stanzfläche bildende Abstanzeinrichtung aufweist, die von der Bewegung des Kalibrierdornes unabhängig zwischen zurückgezogener Position und Stanzposition bewegbar ist. Während bei der erwähnten, bekannten Lösung der zweite Kalibrierdorn sowohl die Kalibrierfläche am Dornende bildet als auch mit einer vom Dornende zurückgesetzten Stufe am Übergang zu einem größeren Dorndurchmesser die Stanzfläche der Trenneinrichtung bildet, sind bei der Erfindung die Funktionen Kalibrieren und Abtrennen voneinander vollständig entkoppelt. Dies bedeutet, dass die Hubbewegung des Dornes für den Kalibriervorgang so gestaltet und gesteuert werden kann, dass die Schließposition an exakt der Stelle erreicht wird, die für die Lage und Wandstärke der zu kalibrierenden Bodenstelle optimal ist. Im Gegensatz hierzu ist man bei der bekannten Lösung für die Bewegung des Kalibrierdornes auf eine für den Stanzvorgang geeignete Schlagbewegung festgelegt, wobei allenfalls bei Einhaltung entsprechend enger Toleranzen gewährleistet werden kann, dass diese Stanzbewegung das Dornende in die für die Kalibrierung optimale Schließposition bringt. Demgegenüber kann bei der Erfindung die Stanzbewegung, unabhängig von der Kalibrierung mit der für den Abtrennvorgang optimalen Schlagbewegung erfolgen.

In besonders vorteilhafter Weise kann hierbei die Abstanzeinrichtung eine auf dem zweiten Kalibrierdorn verschiebbar geführte Abstanzhülse aufweisen, die an ihrem Stirnrand die Schneid- oder Stanzfläche bildet. Trotz der vorteilhaften Entkopplung von Stanz- und Kalibriervorgang ist dadurch eine einfache, kompakte Bauweise möglich, weil, ähnlich wie bei der bekannten Lösung, der Kalibrierdorn und die Abstanzeinrichtung zu einem Baukörper zusammengefasst sind, der im Falle der Erfindung aus zwei koaxialen, relativ zueinander bewegbaren Elementen besteht.

Bei vorteilhaften Ausführungsbeispielen kann der erste Kalibrierdorn am Dornende einen Formkörper mit einer Endfläche zur Kalibrierung der Bodenstelle und mit einem sich an die Endfläche anschließenden Konusteil aufweisen, das sich von der Endfläche weg erweitert, um einen an die Bodenstelle angrenzenden Bodenkelch des Behälters zu formen. Zusätzlich zu seiner Kalibrierfunktion fungiert der erste Kalibrierdorn so als bewegliches Formteil, das dem Behälter eine an den Behälterboden angrenzende Kelchform vermittelt.

In besonders vorteilhafter Weise kann der zweite Kalibrierdorn am Dornende ein Konusteil aufweisen, das sich an die die Bodenstelle kalibrierende Endfläche des Kalibrierdornes anschließt und sich von der Endfläche weg erweitert, um eine sich nach außen erweiternde, hemdartige Ausgabetülle des Behälters zu formen.

Hinsichtlich der Betätigung des zweiten Kalibrierdornes kann die Anordnung mit Vorteil so getroffen sein, dass zum Erzeugen hin- und hergehender Bewegungen des zweiten Kalibrierdornes zwischen zurückgezogener Position und Formgebungsposition und zum Erzeugen der Bewegungen der Abstanzhülse zwischen zurückgezogener Position und Stanzposition gesondert betätigbare Antriebseinrichtungen vorgesehen sind.

Weiterhin können für zwei mittels gemeinsamer Formteile zu bildende Behälter zwei Paare parallel zueinander bewegbarer erster und zweiter Kalibrierdorne vorgesehen sein, wobei beide zweite Kalibrierdorne an einem Grundkörper gelagert sind, der von einem Dornantrieb bewegbar ist.

Bei besonders bevorzugten Ausführungsbeispielen ist die Anordnung so getroffen, dass die zweiten Kalibrierdorne eine Trägerplatte durchgreifen, auf der die jeweiligen Abstanzhülsen gelagert sind und die mittels eines Stanzantriebes relativ zum Grundkörper bewegbar ist, um die Abstanzhülsen relativ zu den zweiten Kalibrierdornen zwischen zurückgezogener Position und Stanzposition zu bewegen. Ein für beide Abstanzhülsen gemeinsamer Stanzantrieb lässt sich so auf besonders einfache Weise realisieren.

Mit besonderem Vorteil kann der Stanzantrieb mindestens einen zwischen Grundkörper und Trägerplatte eingefügten, druckmittelbetätigten Arbeitszylinder zur Erzeugung der Relativbewegungen zwischen Grundkörper und Trägerplatte aufweisen. Alternativ könnte ein elektrischer Linearantrieb, beispielsweise in Form eines Spindeltriebs oder dergleichen, vorgesehen sein. Entsprechendes gilt für den die Bewegungen des Grundkörpers erzeugenden Dornantrieb.

Bei besonders bevorzugten Ausführungsbeispielen ist an der Trägerplatte mindestens ein sich parallel zur jeweiligen Abstanzhülse erstreckender Auswerferstift vorgesehen, der im Zuge des Abtrennvorganges, d. h. bei der in Richtung auf den Bodenbereich der Form verlaufenden Stanzbewegung, die jeweiligen Behälter aus der Form auswirft.

Nachstehend ist die Erfindung anhand eines in der Zeichnung dargestellten Ausführungsbeispieles im Einzelnen erläutert. Es zeigen:
- Fig. 1: einen schematisch vereinfachten Längsschnitt eines Ausführungsbeispieles der erfindungsgemäßen Vorrichtung, wobei Kalibrierdorne in der Formgebungsposition und Abstanzhülsen in der zurückgezogenen Position dargestellt sind;
- Fig. 2: einen gegenüber einer praktischen Ausführungsform etwa in doppelter Größe gezeichneten Längsschnitt eines mit der Vorrichtung hergestellten Behälters in Ampullenform;
- Fig. 3: einen vergrößert gezeichneten Teilschnitt des in Fig. 1 mit III bezeichneten Bezirks und
- Fig. 4: einen der Fig. 3 ähnlichen Teilschnitt, wobei eine Abstanzhülse vor dem Erreichen ihrer Stanzposition dargestellt ist, und wobei sich die Stanzfläche der Abstanzhülse noch in einem Abstand von der zugeordneten Schneidkante befindet.

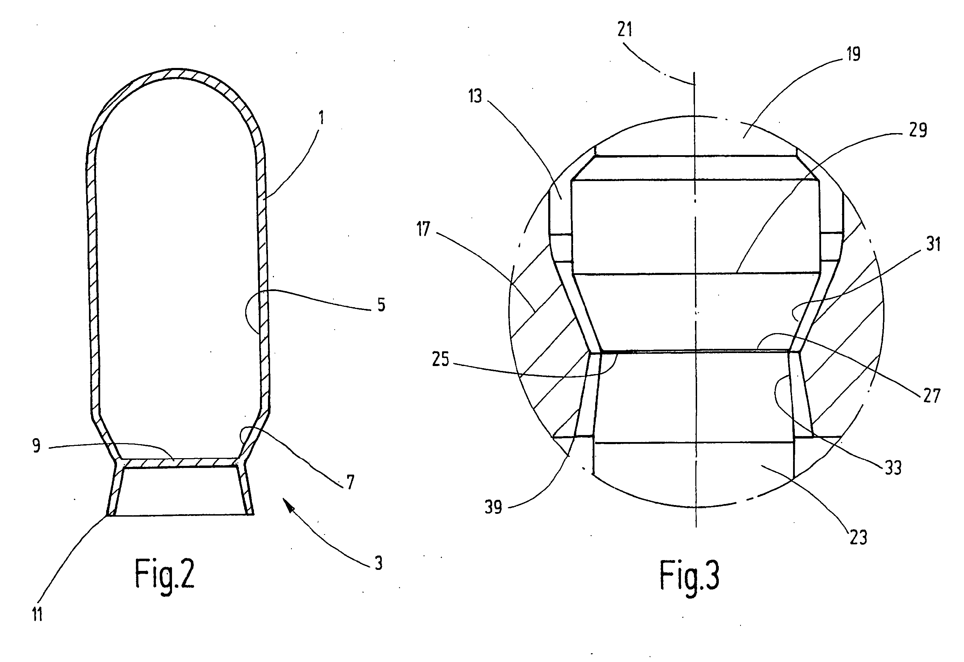

Nachstehend ist die Erfindung anhand eines Beispieles erläutert, bei dem die Vorrichtung zur Herstellung ampullenartiger Behälter vorgesehen ist, von denen einer in Fig. 2 gesondert dargestellt und mit 1 bezeichnet ist. Der in Fig. 2 in geschlossenem Zustand, jedoch ohne Füllung, dargestellte Behälter 1 weist für die spätere Benutzung ein Ausgabeende 3 auf, an dem der kreiszylindrische Hauptteil 5 des Behälters 1 in einen Bodenkelch 7 übergeht, der durch Kegelflächen begrenzt ist, die in Richtung auf den Behälterboden konvergieren, der durch eine den bodenseitigen Verschluss des Behälters 1 bildende Bodenstelle 9 gebildet ist. Im vorliegenden Fall ist die Bodenstelle 9 membranartig ausgebildet und derartig kalibriert, dass sie ein für die spätere Benutzung des Behälters 1 optimales Verschlusselement bildet. An die Bodenstelle 9 schließt sich eine Ausgabetülle 11 an, die durch divergierende Seitenwände begrenzt ist.

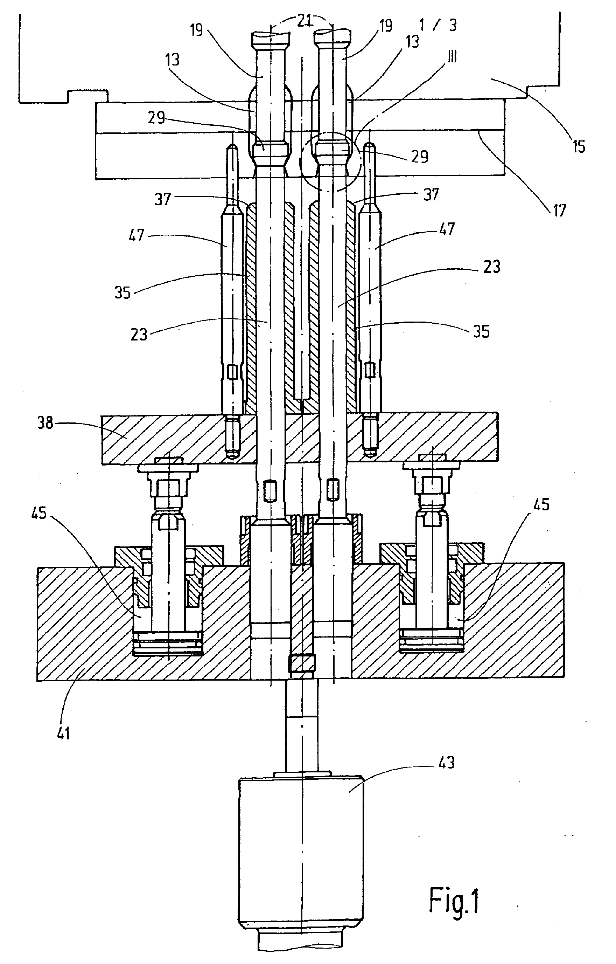

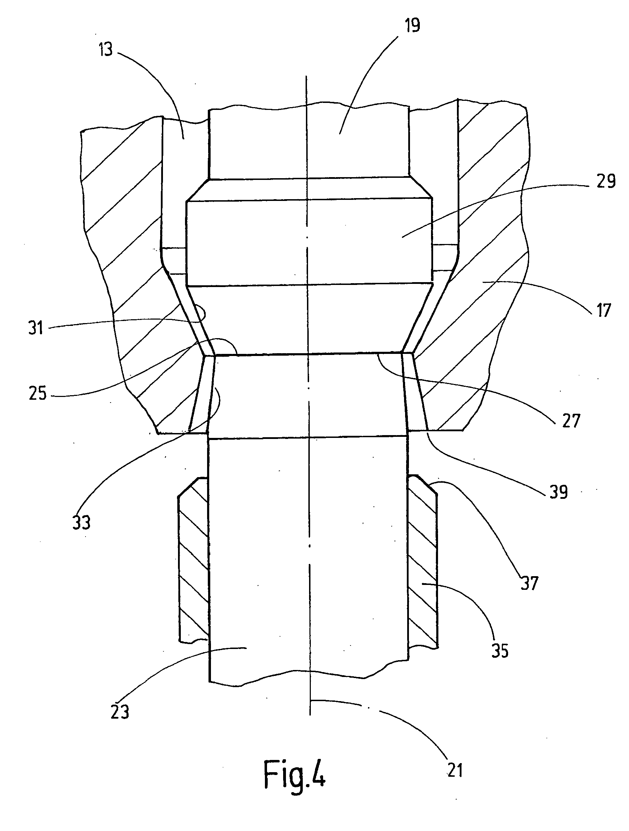

Die Fig. 1 zeigt die für das Verständnis der Erfindung erforderlichen Teile der Vorrichtung zum Herstellen der Behälter 1. Da die Vorrichtung auf dem bekannten bottelpack^{®}-System basiert, sind von der betreffenden Blasform, die für die gleichzeitige Herstellung zweier Behälter 1 zwei in Tandemanordnung nebeneinanderliegende Formhohlräume 13 bildet, lediglich bewegbare Formteile 15, 17, als Hauptbacke und Kopfbacke, angedeutet. Übrige Komponenten, wie Blasdorne, Fülldorne und dergleichen, sind, da sie dem Stand der Technik entsprechend ausgebildet sein können, in Fig. 1 nicht dargestellt. Die Fig. 1 verdeutlicht jedoch in Verbindung mit den Fig. 3 und 4 diejenigen Komponenten, die für die Gestaltung des Ausgabeendes 3 des Behälters 1 mit Bodenkelch 7, kalibrierter Bodenstelle 9 und Ausgabetülle 11 maßgeblich sind.

Wie beim Stand der Technik (DE 30 05 931 A1) aufgezeigt, weist die Vorrichtung ein Paar erste Kalibrierdorne 19 auf, die koaxial zur Längsachse 21 bewegbar sind, die der Längsachse der zu bildenden Behälter 1 entspricht. Der Antrieb für die Bewegungen der ersten Kalibrierdorne 19, die in Fig. 1 sowie in Fig. 3 und 4 jeweils in der Formgebungsposition befindlich dargestellt sind, kann in üblicher, dem Stand der Technik entsprechender Weise gestaltet sein. Die ersten Kalibrierdorne 19 erstrecken sich durch die Formhohlräume 13 hindurch, d.h. durch den Innenraum des jeweiligen Behälters 1, um in der Formgebungsposition in Zusammenwirkung mit einem Paar zweiter Kalibrierdorne 23 die Kalibrierung der Bodenstelle 9 des Behälters 1 vorzunehmen. Die zweiten Kalibrierdorne 23 erstrecken sich koaxial zur Längsachse 21 und zu den ersten Kalibrierdornen 19. Erste und zweite Kalibierdorne 19 und 23 bilden endseits jeweils eine Kalibrierfläche 25 bzw. 27, die beim dargestellten Ausführungsbeispiel Planflächen sind, um im vorliegenden Falle eine Bodenstelle 9 zu kalibrieren, die die Form einer flachen Membran besitzt.

Es versteht sich, dass zur Kalibrierung einer gewölbten oder konturierten Bodenstelle entsprechende Formen der Kalibrierflächen 25, 27 vorgesehen sein könnten. In den Fig., in denen zur Vereinfachung der Zeichnungen kein im Formhohlraum 13 befindliches Kunststoffmaterial dargestellt ist, sind die Kalibrierflächen 25, 27 aneinanderstoßend dargestellt. Im Betrieb befindet sich bei der Formgebungsposition der Kalibrierdorne 25, 27 jedoch ein in der Zeichnung nicht gezeigter Zwischenraum, der der Wanddicke der membranartigen Bodenstelle 9 entspricht.

Die ersten Kalibrierdorne 19 weisen am Dornende einen Formkörper 29 auf, dessen Endfläche die Kalibierfläche 25 bildet, an die sich ein Konusteil 31 anschließt, das sich von der Kalibrierfläche 25 weg erweitert, um den an die Bodenstelle 9 angrenzenden Bodenkelch 7 des Behälters 1 zu formen. In ähnlicher Weise weist der jeweilige zweite Kalibrierdorn 23 am Dornende ein Konusteil 33 auf, das sich an die die Bodenstelle 9 kalibrierende Kalibrierfläche 27 anschließt und sich von der Kalibrierfläche 27 weg erweitert, um die sich nach außen erweiternde, hemdartige Ausgabetülle 11 des Behälters 1 zu formen.

Die näheren Einzelheiten der Abtrenneinrichtung der Vorrichtung sind den Fig. 1 und 4 entnehmbar. Wie ersichtlich, ist auf jedem der zweiten Kalibrierdorne 23 eine Abstanzhülse 35 mit Gleitpassung axial bewegbar geführt. Wie am deutlichsten aus Fig. 4 zu ersehen ist, weist die Abstanzhülse 35 an ihrem Stirnrand eine Schrägfläche 37 auf, die als Stanzfläche mit einer Schneid- oder Anlegekante 39 zusammenwirkt, die durch den Endrand der Ausgangsöffnung des Formteiles 17 gebildet ist. Wenn im Betrieb die Abstanzhülse 35 aus der in Fig. 4 gezeigten Stellung heraus auf dem zweiten Kalibrierdorn 23 in die Stanzposition, d.h. in Fig. 4 nach oben, bewegt wird, wird überschüssiges Kunststoffmaterial, das den Endrand der geformten Ausgabetülle 11 umgibt, abgestanzt.

Wie Fig. 1 zeigt, sind beide Abstanzhülsen 35 mit ihren der Schrägfläche 37 entgegengesetzten Enden auf einer gemeinsamen Trägerplatte 38 abgestützt, die von den zweiten Kalibrierdornen 23 durchgriffen, jedoch relativ zu diesen bewegbar ist. Die zweiten Kalibrierdorne 23 sind an einem Grundkörper 41 befestigt, an dem ein Linearantrieb 43 angreift, der für die Bewegungen der zweiten Kalibrierdorne 23 den Dornantrieb bildet. Dieser Antrieb 43 kann ein elektrischer, hydraulischer oder pneumatischer Antrieb sein. Unabhängig von den Bewegungen des Grundkörpers 41 und damit der Kalibrierdorne 23 ist die Trägerplatte 38 und mit ihr die Abstanzhülsen 35 durch einen Stanzantrieb relativ zu den zweiten Kalibrierdornen 23 bewegbar. Beim vorliegenden Ausführungsbeispiel sind als Stanzantrieb zwei Arbeitszylinder 45 vorgesehen, von denen zu beiden Seiten der Kalibrierdorne 23 jeweils einer zwischen Grundkörper 41 und Trägerplatte 38 angeordnet ist und die hydraulisch oder pneumatisch betätigbar sind, um die Stanzbewegung der Abstanzhülsen 35 zu erzeugen. Anstelle der Arbeitszylinder 45 könnten auch hier andersartige Linearantriebe benutzt werden. Seitlich neben jeder der Abstanzhülsen 35 sind an der Trägerplatte 38 Auswerferstifte 47 gelagert, die sich neben den Abstanzhülsen 35 parallel zu diesen erstrecken und das nach dem Abtrennvorgang verbleibende Material einschließlich der Behälter 1 aus der geöffneten Form auswerfen.

## Patentansprüche

1. Vorrichtung zum Herstellen mindestens eines Behälters (1), insbesondere in Ampullenform, aus thermoplastischem Kunststoff, mit einer Form (13) mit Formteilen (15, 17), die zwischen einer Offenstellung und einer Schließstellung relativ zueinander bewegbar sind, in welcher Kunststoffmaterial durch einen daran wirksamen Druckgradienten zur Bildung des Behälters (1) an die Wand der Form (13) anlegbar ist, mit einem ersten (19) und einem zweiten Kalibrierdorn (23), die zur Längsrichtung (21) des Behälters (1) und zueinander koaxial bewegbar sind, wobei der erste Kalibrierdorn (19) durch den in der Form (13) befindlichen Behälter (1) hindurch und der zweite Kalibrierdorn (23) von der Außenseite des Behälters (1) her relativ zueinander in eine Formgebungsposition bewegbar sind, in der sie zwischen ihren Dornenden (25, 27) eine zumindest einen Teil eines Behälterbodens bildende Bodenstelle (9) kalibrieren, und mit einer Abtrenneinrichtung, die eine bewegbare Schneidoder Stanzfläche (37) aufweist, um in Zusammenwirkung mit einer Schneid- oder Anlegekante (39) an den dem Bodenbereich zugeordneten Formteilen (17) bei der Formgebung entstehendes, überschüssiges Kunststoffmaterial abzutrennen, **dadurch gekennzeichnet, dass** die Abtrenneinrichtung eine an dem zweiten Kalibrierdorn (23) axial verschiebbar geführte, die Schneid- oder Stanzfläche (37) bildende Abstanzeinrichtung (35) aufweist, die von der Bewegung des jeweiligen Kalibrierdornes (23) unabhängig zwischen zurückgezogener Position und Stanzposition bewegbar ist.

2. Vorrichtung nach Anspruch 1, **dadurch gekennzeichnet, dass** die Abstanzeinrichtung eine auf dem zweiten Kalibrierdorn (23) verschiebbar geführte Abstanzhülse (35) aufweist, die an ihrem Stirnrand die Schneidoder Stanzfläche (37) bildet.

3. Vorrichtung nach Anspruch 1 oder 2, **dadurch gekennzeichnet, dass** der erste Kalibrierdorn (19) am Dornende einen Formkörper (29) mit einer Endfläche (25) zur Kalibrierung der Bodenstelle (9) und mit einem sich an die Endfläche (25) anschließenden Konusteil (31) aufweist, das sich von der Endfläche (25) weg erweitert, um einen an die Bodenstelle (9) angrenzenden Bodenkelch (7) des Behälters (1) zu formen.

4. Vorrichtung nach einem der vorstehenden Ansprüche, **dadurch gekennzeichnet, dass** der zweite Kalibrierdorn (23) am Dornende ein Konusteil (33) aufweist, das sich an die die Bodenstelle (9) kalibrierende Endfläche (27) des Kalibrierdornes (23) anschließt und sich von der Endfläche (27) weg erweitert, um eine sich nach außen erweiternde, hemdartige Ausgabetülle (11) des Behälters (1) zu formen.

5. Vorrichtung nach einem der vorstehenden Ansprüche, **dadurch gekennzeichnet, dass** sie gesondert betätigbare Antriebseinrichtungen (43, 45) zum Erzeugen hin- und hergehender Bewegungen des zweiten Kalibrierdornes (23) zwischen zurückgezogener Position und Formgebungsposition und zum Erzeugen der Bewegungen der Abstanzhülse (35) zwischen zurückgezogener Position und Stanzposition aufweist.

6. Vorrichtung nach einem der vorstehenden Ansprüche, **dadurch gekennzeichnet, dass** für zwei mittels gemeinsamer Formteile (15, 17) zu bildender Behälter (1) zwei Paare parallel zueinander bewegbarer erster (19) und zweiter Kalibrierdorne (23) vorgesehen sind und dass beide zweite Kalibrierdorne (23) an einem Grundkörper (41) gelagert sind, der von einem Dornantrieb (43) bewegbar ist.

7. Vorrichtung nach einem der vorstehenden Ansprüche, **dadurch gekennzeichnet, dass** die zweiten Kalibrierdorne (23) eine Trägerplatte (38) durchgreifen, auf der die jeweiligen Abstanzhülsen (35) gelagert sind und die mittels eines Stanzantriebes (45) relativ zum Grundkörper (41) bewegbar ist, um die Abstanzhülsen (35) relativ zu den zweiten Kalibrierdornen (23) zwischen zurückgezogener Position und Stanzposition zu bewegen.

8. Vorrichtung nach einem der vorstehenden Ansprüche, **dadurch gekennzeichnet, dass** der Stanzantrieb mindestens einen zwischen Grundkörper (41) und Trägerplatte (38) eingefügten, druckmittelbetätigten Arbeitszylinder (45) zur Erzeugung der Relativbewegungen zwischen Grundkörper (41) und (38) aufweist.

9. Vorrichtung nach einem der vorstehenden Ansprüche, **dadurch gekennzeichnet, dass** an der Trägerplatte (38) mindestens ein sich parallel zur jeweiligen Abstanzhülse (35) erstreckender Auswerferstift (47) für eine im Zuge des Abtrennvorganges erfolgende Auswerfertätigkeit vorgesehen ist.

10. Vorrichtung nach ei nem der vorstehenden Ansprüche, **dadurch gekennzeichnet, dass** die Formteile (15, 17) quer zu der Längsrichtung (21) des Behälters (1), die der Längsachse des jeweils zu formenden Behälters (1) entspricht, zwischen der Offenstellung und der Schließstellung bewegbar sind.

## Claims

1. An apparatus for producing at least one container (1), in particular in the form of an ampule, from thermoplastic material, and comprising a mould (13) with mould parts (15, 17) which can be moved in relation to one another between an open position and a closed position and in which plastic material can be placed against the wall of the mould (13) by means of a pressure gradient which acts on said plastic material in order to form the container (1), comprising a first (19) and a second calibrating mandrel (23) which can be moved coaxially in relation to the longitudinal direction (21) of the container (1) and to one another, the first calibrating mandrel (19) and the second calibrating mandrel being able to be moved in relation to one another so that the first calibrating mandrel (19) can move through the container (1), which is located in the mould (13), and the second calibrating mandrel (23) can move from the outside of the container (1) into a shaping position in which they calibrate a bottom area (9) which forms at least part of a container bottom between their mandrel ends (25, 27), and comprising a separating device which has a moveable cutting or punching surface (37) in order to separate excess plastic material which forms in interaction with a cutting or contact edge (39) on the mould parts (17) assigned to the bottom region during the shaping process, **characterised in that** the separating device has a cutting device (35) which is guided in an axially displaceable manner on the second calibrating mandrel (23), forms the cutting or punching surface (37), and can move between the retracted position and the punching position independently of the movement of the respective calibrating mandrel (23).

2. The apparatus according to Claim 1, **characterised in that** the cutting device has a cutting sleeve (35) that is guided displaceably over the second calibrating mandrel (23) and which forms on its front edge the cutting or punching surface (37).

3. The apparatus according to Claim 1 or 2, **characterised in that** the first calibrating mandrel (19) has on the mandrel end a moulded body (29) with an end surface (25) for the purpose of calibrating the bottom area (9) and with a conical part (31) which is connected to the end surface (25) and which widens away from the end surface (25) in order to form a bottom cup (7) of the container (1), with this bottom cup being adjacent to the bottom area (9).

4. The apparatus according to any of the preceding claims, **characterised in that** the second calibrating mandrel (23) has on the mandrel end a conical part (33) that is connected to the end surface (27) of the calibrating mandrel (23) that calibrates the bottom area (9), and this conical part widens away from the end surface (27) in order to form an outwardly widening dispensing spout (11) of the container (1) that has a shape resembling a shirt.

5. The apparatus according to any of the preceding claims, **characterised in that** it has separately actuatable drive devices (43, 45) in order to generate the back and forward movements of the second calibrating mandrel (23) between the retracted position and the shaping position and in order to generate the movements of the cutting sleeve (35) between the retracted position and the punching position.

6. The apparatus according to any of the preceding claims, **characterised in that** two pairs of first (19) and second calibrating mandrels (23) that can be moved in parallel to one another are provided for two containers (1) that are to be formed by means of common mould parts (15, 17), and that both second calibrating mandrels (23) are mounted on one base body (41) that can be moved by a mandrel drive (43)

7. The apparatus according to any of the preceding claims, **characterised in that** the second calibrating mandrels (23) pass through a support plate (38) on which the respective cutting sleeves (35) are mounted and that can be moved relative to the base body (41) by means of a punch drive (45) in order to move the cutting sleeves (35) relative to the second calibrating mandrels (23) between the retracted position and the punching position.

8. The apparatus according to any of the preceding claims, **characterised in that** the punch drive has at least one working cylinder (45) which is fitted between the base body (41) and the support plate (38) and is actuated with a pressure medium in order to generate the relative movements between the base body (41) and the support plate (38).

9. The apparatus according to any of the preceding claims, **characterised in that** there is provided on the support plate (38) at least one ejector pin (47) extending parallel to the respective cutting sleeve (55) for ejecting activity that takes place in the course of the separating process.

10. The apparatus according to any of the preceding claims, **characterised in that** the mould parts (15, 17) can be moved between the open position and the closed position transversely to the longitudinal direction (21) of the container (1) that corresponds to the longitudinal axis of the respective container (1) to be formed.

## Revendications

1. Dispositif de fabrication d'au moins un récipient (1), notamment sous forme d'ampoule, en matière plastique thermoplastique, comprenant un moule (13) ayant des parties (15, 17) de moule, qui peuvent être déplacées l'une par rapport à l'autre en une position d'ouverture et une position de fermeture, dans lequel de la matière plastique peut, pour la formation du récipient (1), être appliquée à la paroi du moule (13) par un gradient de pression qui y est efficace, comprenant un premier poinçon (19) et un deuxième poinçon (23) de calibrage, qui sont mobiles dans la direction (21) longitudinale du récipient (21) et coaxialement l'un par rapport à l'autre, le premier poinçon (19) de calibrage pouvant passer à travers le récipient (1) se trouvant dans le moule (13) et le deuxième poinçon (23) de calibrage pouvant, à partir du côté extérieur du récipient (1), se déplacer relativement par rapport à l'autre pour venir dans une position de moulage, dans lequel ils calibrent, entre leurs extrémités (25, 27), une position (9) de fond formant au moins une partie d'un fond du récipient, et comprenant un dispositif de séparation, qui a une surface (37) mobile de coupe ou de poinçonnage, pour, en coopération avec une arête (39) de coupe ou d'application sur les parties (17) du moule associées à la partie de fond, séparer de la matière plastique en excès se formant lors du moulage, **caractérisé en ce que** le dispositif de séparation a un dispositif (35) de poinçonnage, qui peut coulisser axialement sur le deuxième poinçon (23) de calibrage, qui forme la surface (37) de coupe ou de poinçonnage et qui est mobile entre une position escamotée et une position de poinçonnage, indépendamment du déplacement du poinçon (23) de calibrage respectif.

2. Dispositif suivant la revendication 1, **caractérisé en ce que** le dispositif de poinçonnage a un manchon (35) de poinçonnage pouvant coulisser sur le deuxième poinçon (23) de calibrage et formant, sur son bord frontal, la surface (37) de coupe ou de poinçonnage.

3. Dispositif suivant la revendication 1 ou 2, **caractérisé en ce que** le premier poinçon (19) de calibrage a, à l'extrémité, une pièce (29) façonnée ayant une surface (25) d'extrémité pour le calibrage de la position (9) du fond et ayant une partie (31) conique se raccordant à la surface (25) d'extrémité, qui s'élargit en s'éloignant de la surface (25) d'extrémité, pour former un calice (7) de fond du récipient (1) au voisinage de la position (9) du fond.

4. Dispositif suivant l'une des revendications précédentes, **caractérisé en ce que** le deuxième poinçon (23) de calibrage a, à l'extrémité, une partie (33) conique, qui se raccorde à la surface (27) d'extrémité, calibrant la position (9) du fond, du poinçon (23) de calibrage et qui s'élargit en s'éloignant de la surface (27) d'extrémité, pour former une douille (11) de sortie du récipient (1) s'évasant vers l'extérieur de type chemise.

5. Dispositif suivant l'une des revendications précédentes, **caractérisé en ce qu'**il a des dispositifs (43, 45) d'entraînement pouvant être actionnés séparément, pour produire des mouvements de va-et-vient du deuxième poinçon (23) de calibrage entre la position escamotée et la position de moulage et pour produire les mouvements du manchon (35) de poinçonnage entre la position escamotée et la position de poinçonnage.

6. Dispositif suivant l'une des revendications précédentes, **caractérisé en ce qu'**il est prévu, pour des récipients (1) à former au moyen de parties (15, 17) de moule communes, deux paires de premiers (19) et deuxièmes (23) poinçons de calibrage mobiles parallèlement l'un à l'autre et **en ce que** les deux deuxièmes poinçons (23) de calibrage sont montés sur une pièce (41) de base, qui peut être déplacée par un entraînement (43) de poinçon.

7. Dispositif suivant l'une des revendications précédentes, **caractérisé en ce que** les deuxièmes poinçons (23) de calibrage traversent une plaque (38) formant support, sur laquelle sont montés les manchons (35) de poinçonnage respectifs et qui est mobile par rapport à la pièce (41) de base au moyen d'un entraînement (45) de poinçonnage, pour déplacer les manchons (35) de poinçonnage par rapport aux deuxièmes poinçons (23) de calibrage entre la position escamotée et la position de poinçonnage.

8. Dispositif suivant l'une des revendications précédentes, **caractérisé en ce que** l'entraînement de poinçonnage a, pour produire les mouvements relatifs entre la pièce (41) de base et la plaque (38) formant support, un vérin (45) de travail inséré entre la pièce (41) de base et la plaque (38) formant support et actionné par du fluide sous pression.

9. Dispositif suivant l'une des revendications précédentes, **caractérisé en ce qu'**il est prévu, pour une activité d'éjection s'effectuant à la suite de l'opération de séparation, sur la plaque (38) formant support, au moins une tige (47) d'éjection s'étendant parallèlement au manchon (35) de poinçonnage respectis.

10. Dispositif suivant l'une des revendications précédentes, **caractérisé en ce que** les parties (15, 17) du moule sont mobiles, entre la position d'ouverture et la position de fermeture, transversalement à la direction (21) longitudinale du récipient (1), qui correspond à l'axe longitudinal du récipient (1) à former respectivement.
